# EUROPEAN PATENT SPECIFICATION

(11) **EP 3 508 012 B1**
(45) Date of publication and mention of the grant of the patent: **20.04.2022**
(21) Application number: 17852373.4
(22) Date of filing: 20.09.2017
(51) Int. Cl.: H04W 72/00

(54) **METHOD FOR DATA TRANSMISSION WITH MULTIPLE UPLINK CARRIER IN MOBILE COMMUNICATIONS**
VERFAHREN ZUR DATENÜBERTRAGUNG MIT MEHREREN UPLINK-TRÄGERN IN DER MOBILKOMMUNIKATIONEN
PROCÉDÉ DE TRANSMISSION DE DONNÉES AVEC DE MULTIPLES PORTEUSES DE LIAISON MONTANTE DANS DES COMMUNICATIONS MOBILES

(30) Priority: 20.09.2016 US 201662396902 P; 04.08.2017 US 201762541192 P
(43) Date of publication of application: 10.07.2019
(60) Divisional application: 22160412.7
(73) Proprietor: MEDIATEK INC., Hsin-Chu 300 (TW)
(72) Inventor: CHEN, Yih-Shen, Zhubei City Hsinchu County 302 (TW); YANG, Shun-An, Baoshan Township Hsinchu County (TW); LIN, Chih-Hsiu, Jiaoxi Township Yilan County 262 (TW); LIN, Guan-Yu, Caotun Township Nantou County 542 (TW)
(74) Representative: Hoefer & Partner Patentanwälte mbB
(86) International application number: PCT/CN2017/102478
(87) International publication number: WO 2018/054305

(56) References cited:
- WO-A1-2012/024338
- CN-A- 1 401 197
- CN-A- 101 466 153
- CN-A- 101 772 131
- CN-A- 102 811 486
- US-A1- 2011 103 328
- US-A1- 2012 269 148
- US-A1- 2013 155 984

## Description

### CROSS REFERENCE TO RELATED APPLICATIONS

The present disclosure claims the priority benefit of U.S. Provisional Patent Application Ser. No. 62/396,902, filed on 20 September 2016 and U.S. Provisional Patent Application Ser. No. 62/541,192, filed on 4 August 2017.

### FIELD OF INVENTION

The present disclosure is generally related to mobile communications and, more particularly, to data transmission over multiple uplink carriers with respect to user equipment in mobile communications.

### BACKGROUND OF THE INVENTION

Unless otherwise indicated herein, approaches described in this section are not prior art to the claims listed below and are not admitted as prior art by inclusion in this section.

In a wireless communication network comprising a plurality of base stations or network nodes, a communication apparatus (e.g., user equipment) may need to establish a connection with one of the base stations first for performing data transmission. After the connection is established, the base station may further configure transmission link for data transmission. Thus, the key issues in wireless communication system design may be how to effectively establish a connection and how to properly configure a transmission link. For connection establishment, it may involve cell selection and initial access procedure. For transmission link configuration, it may involve transmission mechanism design including power control, radio carrier selection/configuration, scheduling and other configuration parameters. In the present disclosure, novel solutions for dealing with the aforementioned challenges in a new generation communication network (e.g., a 5G network) are proposed.

For data transmission, link budget is an important aspect for determining whether signal transmission can be effectively conducted between communication peer ends. It is well known that a base station normally has more transmission power than a user equipment and the transmission power requirement is proportional to data rate. Further, the actual transmission power requirements are relevant to transmission distance and channel fading characteristics in a frequency band for performing the transmission. If the base station and the user equipment are not located far away, there may be no link budget issue. However, as the user equipment moves away from the base station, link budget gap between downlink (e.g., from the base station to the user equipment) and uplink (e.g., from the user equipment to the base station) may occur. The link budget issue is more serious in uplink than downlink due to low transmission power from the user equipment side. In the new generation communication network, this problem may become worse if the data transmission is over high frequency bands (e.g., mmWave bands).

Accordingly, how to resolve link budget issues in uplink transmission is important. It is needed to design proper connection establishments and effective transmission link configurations in developing a new generation communication network.

WO2012/024338A1 discloses a method in a wireless communication terminal that supports aggregated carrier access including transmitting a power headroom report of a first type, determining that a condition for transmitting a power headroom of a second type is satisfied and transmitting a power headroom report of the second type.

US2013/0155984A1 discloses a method and an apparatus for providing control information for multi-carrier uplink transmission.

US2012/0269148A1 discloses methods and devices whereby a primary uplink and downlink carrier can be dynamically changed.

CN102811486A discloses a method, a device and associated equipment for scheduling carrier, which are used for avoiding mutual interference between carriers loading information in opposite transmission directions and ensuring the communication quality of a mobile terminal under a scene of discontinuous carrier aggregation of different frequency ranges.

CN1401197A discloses a wireless communication system in which a physical control channel includes a synchronization channel, consisting of a burst of characters (SYNC1), effectively entering the serving cell, randomly selected and transmitted by the mobile station for obtaining uplink synchronization and power adjustment.

### SUMMARY OF THE INVENTION

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

A method according to the invention is defined by claim 1.

An objective of the present disclosure is to propose solutions or schemes that address the aforementioned issues with respect to data transmission over multiple uplink carrier in a mobile communication network. In implementations in accordance with the present disclosure, the user equipment is able to establish connections with the base station over one downlink component carrier and multiple uplink component carriers. The user equipment may be configured to perform uplink data transmission via the multiple uplink component carriers.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario under schemes in accordance with implementations of the present disclosure.
FIG. 2 is a diagram depicting an example scenario under schemes in accordance with implementations of the present disclosure.
FIG. 3 is a diagram depicting an example MAC CE format under schemes in accordance with implementations of the present disclosure.
FIG. 4 is a diagram depicting example operating frequency bands under schemes in accordance with implementations of the present disclosure.
FIG. 5 is a block diagram of an example communication apparatus and an example network apparatus in accordance with an implementation of the present disclosure.
FIG. 6 is a flowchart of an example process in accordance with an implementation of the present disclosure.
FIG. 7 is a flowchart of an example process in accordance with an implementation of the present disclosure.
FIG. 8 is a flowchart of an example process in accordance with an implementation of the present disclosure.

### DETAILED DESCRIPTION

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to data transmission with multiple uplink carrier with respect to user equipment in mobile communications. According to the present disclosure, a number of possible solutions may be implemented separately or jointly. That is, although these possible solutions may be described below separately, two or more of these possible solutions may be implemented in one combination or another.

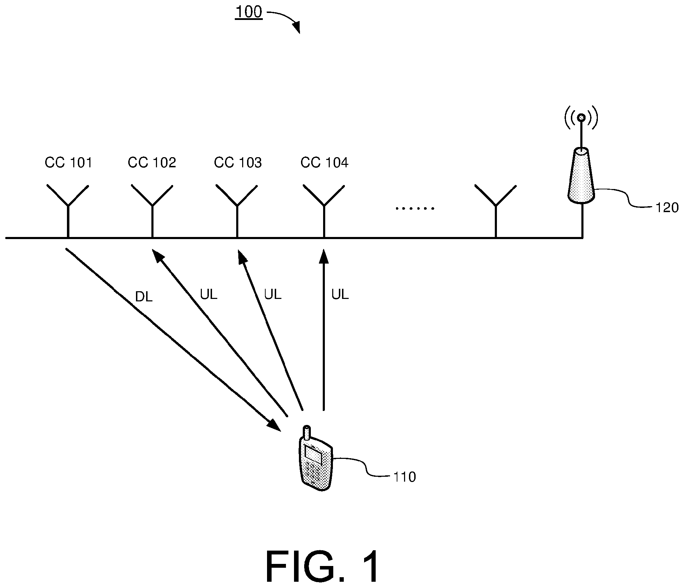

FIG. 1 illustrates an example scenario 100 under schemes in accordance with implementations of the present disclosure. Scenario 100 involves a user equipment (UE) 110 and a network apparatus 120, which may be part of a wireless network (e.g., a LTE network, a LTE-Advanced network, a LTE-Advanced Pro network, a 5G network, a new radio network or an Internet of Things network). Network apparatus 120 is able to transmit downlink data to UE 110 via a downlink radio carrier. UE 110 is able to transmit uplink data to network apparatus 120 via an uplink radio carrier. According to implementations of the present disclosure, data transmission may be conducted by combining one downlink radio carrier with a plurality of uplink radio carriers for better coverage and performance in uplink direction. For each configured downlink radio carrier or uplink radio carrier, it may be called a component carrier (CC) in the following descriptions. Each CC may be configured with a specific frequency band and a channel bandwidth.

As showed in FIG. 1, UE 110 may be configured one downlink CC 101 with network apparatus 120. UE 110 may further be configured a plurality of uplink CC 102, 103, 104, etc. with network apparatus 120. UE 110 is able to transmit uplink data to network apparatus 120 via at least one of the plurality of uplink CCs 102, 103, 104, etc. In some implementations, one of the uplink CCs may be configured in a low-frequency band (e.g., 900 MHz) and one of the uplink CCs may be configured in a high-frequency band (e.g., 3.5 GHz). Generally, the low-frequency band uplink CC has better transmission properties such as low transmission attenuation or slow channel fading which are very important for maintaining good UE mobility management. In contrast, the high-frequency band CC has larger transmission bandwidth which is beneficial for high data rate transmission. With proper design in accordance with the implementations of the present disclosure, UE is able to alternate uplink transmission among the plurality of uplink CCs to strike a balance between good mobility management and high data rate transmission requirements. Furthermore, uplink transmission may be boosted by aggregating more than one uplink CCs to increase uplink data rate. In some implementations, the UE may be connected to one network apparatus (e.g., eNB, gNB, base station or network node) overone downlink CC and multiple uplink CCs. In other implementations, the UE may also be connected to more than one network apparatus over one downlink CC and multiple uplink CCs. The multiple uplink CCs may be configured by different network apparatus. The procedures for establishing connections over one downlink CC with multiple uplink CCs will be described in the following descriptions.

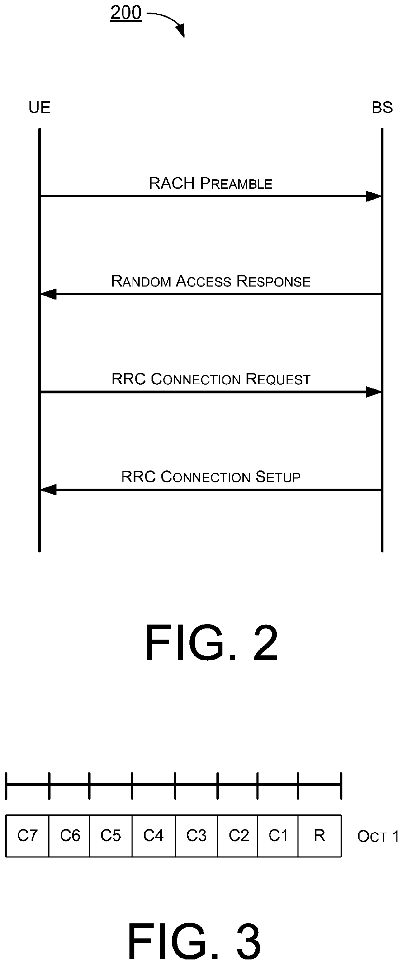

FIG. 2 illustrates an example scenario 200 under schemes in accordance with implementations of the present disclosure. Scenario 200 involves a user equipment (UE) and a network apparatus (e.g., a base station (BS)), which may be part of a wireless network (e.g., a LTE network, a LTE-Advanced network, a LTE-Advanced Pro network, a 5G network, a new radio network or an Internet of Things network). At first, the UE may be configured to perform cell selection to select a proper downlink CC of a BS in a wireless communication network. After selecting the downlink CC (e.g., downlink CC 101), the UE should initiate an initial access procedure over one uplink CC to establish a connection with the BS. Since the BS may have a plurality of uplink CC candidates for the UE to establish the connection, the BS may be configured to transmit information of the plurality of uplink CCs in broadcast information. The UE may be configured to receive the broadcast information from the BS via the downlink CC.

The broadcast information may comprise, for example and without limitation, frequency (e.g., central frequency) and bandwidth information of each uplink CC, a criterion for assessing the plurality of uplink CCs, initial access parameters of each uplink CC or load distribution parameters. After receiving the broadcast information, the UE may be configured to assess the plurality of uplink CC candidates according to the broadcast information. Specifically, the assessing criteria may be pathloss of the downlink CC. For example, if the pathloss of the downlink CC is greater than a predetermined threshold value which may be comprised in the broadcast information, it may mean that the UE is far away from the BS or at cell edge of the BS coverage, or the channel quality between the UE and the BS is bad. In order to maintain good mobility management, the UE may select a low-frequency band uplink CC (e.g., uplink CC 102) as a first uplink CC to facilitate that the BS may be able to correctly receive uplink signal. If the pathloss of the downlink CC is not greater than a predetermined threshold value or there are multiple uplink CCs meet the assessing criteria, load distribution parameters may be further applied to avoid uplink congestion problem (e.g., random access channel (RACH) collision). The BS may use the load distribution parameters to evenly distribute a great number of UEs among multiple uplink CCs for performing initial access procedure. The UE may be configured to select a first uplink CC according to the load distribution parameters.

After selecting the first uplink CC from the plurality of uplink CCs, the UE is able to perform the initial access procedure via the first uplink CC according to the initial access parameters in the broadcast information. As showed in Fig. 2, the UE may be configured to transmit a preamble message (e.g., RACH preamble message) via the first uplink CC to the BS. The BS may be configured to transmit a response message (e.g., random access response (RAR) message) for allocating uplink transmission resources for following signal transactions via the downlink CC to the UE.Since there are multiple uplink CCs and only one downlink CC, the RAR message may need to carry further information (e.g., CC information) for the UE to distinguish RACH over the plurality of uplink CCs. Specifically, the RAR message may carry a RACH radio network temporary identity (RA-RNTI) which may comprise carrier identity (ID) and time-frequency information of the allocated RACH resources. For example, RA-RNTI may be derived by an equation of RA - RNTI = X ∗ Carrier_ID + Y ∗ Time_Index + Z ∗ Frequency_Index, whereCarrier_ID is used to specify the first uplink CC and the Time_Index and the Frequency_Index are used to indicate the allocated RACH resources. The parameters of X, Y and Z may be properly determined for uniquely identifying a specific RACH without RACH ambiguity problems. In some implementations, different numerologies may be involved for different uplink CCs, RA-RNTI may be derived by incorporating the numerologies as one of the parameters. For example, symbol number or transmission time interval (TTI) may be different among different uplink CCs. RA-RNTI may be derived by further considering symbol number or TTI parameters.

After receiving the RAR message, the UE may get the uplink RACH resources over the first uplink CC and may be able to transmit a request message (e.g., Radio Resource Control (RRC) Connection Request) for requesting RRC connection establishment to the BS via the first uplink CC. The BS may be configured to transmit a connection setup message (e.g., RRC Connection Setup) for establishing the RRC connection to the UE via the downlink CC. After the initial access process is completed successfully, a RRC connection nay be established between the UE and the BS with one downlink CC and one uplink CC.

After the downlink CC and the first uplink CC have been determined, the BS maybe configured to further configure more uplink CCs to the UE to facilitate CC switching or CC aggregation. Specifically, the BS may be configured to transmit configuration of a second uplink CC to the UE via the downlink CC. The UE may be configured to establish a connection over the second uplink CC with the BS. After the second uplink CC is configured, the UE may be able to transmit uplink data to the BS via at least one of the first uplink CC and the second uplink CC. The UE may be configured to assign the first uplink CC as a primary carrier and assign the second uplink CC as a supplementary carrier. The UE may also change the primary carrier among the configured uplink CCs (e.g., from the first uplink CC to the second uplink CC) according to a trigger event. The trigger event may be based on a buffer status report (BSR) or a power headroom report (PHR).

Specifically, when the UE has uplink data in buffer, the UE may transmit a BSR to the BS for requesting uplink transmission resources. If the BSR indicates a great amount of uplink data, the BS may transmit a command for triggering CC switching to the UE. As aforementioned, high-frequency band CC normally has a wide bandwidth and is beneficial for high data rate transmission. Thus, the UE may be configured to switch the primary carrier to an uplink CC in high-frequency band. For example, the UE may be configured to switch the primary carrier from the first uplink CC to the second uplink CC (e.g., from uplink CC 102 to uplink CC 103). In some implementations, the BS may further configure a third uplink CC with available uplink transmission resources (e.g., uplink CC 104) to the UE. The UE may switch the primary carrier to the third uplink CC.

On the other hand, when UE uplink power reaches a predetermined threshold value, the UE may transmit a PHR to the BS. For example, if the PHR indicates that UE uplink power has reached maximum transmission power, it may mean that the UE is far away from the BS or at cell edge of the BS coverage, or the channel quality between the BS and the UE is bad. The BS may transmit a command for triggering CC switching to the UE. As aforementioned, low-frequency band CC is beneficial for maintaining good mobility management. Thus, the UE may be configured to switch the primary carrier to an uplink CC in low-frequency band. For example, the UE may be configured to switch the primary carrier from the second uplink CC to the first uplink CC (e.g., from uplink CC 103 to uplink CC 102).

In some implementations, the CC switching may be implemented in one of protocol layers (e.g., layer 1, layer 2 or layer 3). In layer 1 (e.g., physical layer) implementation, the BS may transmit a Physical Downlink Control Channel (PDCCH) command to the UE for triggering the CC switching. In layer 2 (e.g., Media Access Control (MAC) layer) implementation, the BS may transmit a MAC control element (MAC CE) command to the UE for triggering the CC switching. In layer 3 (e.g., RRC layer) implementation, the BS may transmit a RRC message (e.g., RRC Connection Reconfiguration) to the UE for triggering the CC switching. Since a scheduler is normally implemented in the MAC layer, the layer 2 implementation may be obvious. For facilitating fast CC switching, the layer 1 implementation may be considerable. The layer 3 implementation may be applied if CC switching is accompanied with data bearer configuration.

According to the invention, in addition to CC switching, the above-mentioned implementations are used to enable CC aggregation. For example, an implementation for enabling CC aggregation by MAC CE command is illustrated in FIG. 3.FIG. 3 illustrates an example MAC CE format under schemes in accordance with implementations of the present disclosure. In FIG. 3, there are 7 data bits represented as "C1" to "C7" for indicating 7 uplink CCs and 1 reservation bit represented as "R". Each data bit may represent whether an uplink CC is activated. For example, when the data bit is flipped to be 1, it means that the corresponding uplink CC is activated. When the data bit is flipped to be 0, it means that the corresponding uplink CC is de-activated. If more than one data bits are flipped to be 1, it means that the CC aggregation is enabled. The UE may be configured to aggregate the uplink CCs which are activated. If only one data bit is flipped to be 1, it may mean that the CC switching is enabled. For example, if C1 is changed from 1 to 0 and C2 is changed from 0 to 1, the UE may be configured to switch the primary carrier from the first uplink CC to the second uplink CC. In some implementations, two set of MAC CE bit strings may be used for respective indication. For example, a first set of MAC CE bit strings may be used to indicate the primary CC for CC switching while the second set of MAC CE bit strings may be used to indicate uplink CCs to be aggregated for CC aggregation.

In some implementations, uplink transmission power control over one downlink CC with multiple uplink CCs may be implemented in open-loop power control (OLPC) or closed-loop power control (CLPC). For the OLPC, the UE may be configured to compensate the pathloss of the downlink CC. Specifically, the UE may be configured to measure reference signals from the downlink CC and derive the downlink pathloss. Since the downlink CC may be the only measurement object, the UE may be configured to estimate pathloss of uplink CCs based on the measured downlink pathloss. If the uplink CCs and the downlink CC are in different frequency band, the channel characteristics may be different and the measurement of the downlink CC cannot be directly applied to the uplink CCs. Accordingly, the BS may be configured to further provide an additional power control offset to the UE. That is, the OLPC should compensate the pathloss measurement from the downlink CC by considering the additional power control offset. The UE is able to estimate the pathloss of the uplink CCs according to the measured downlink CC pathloss and the additional power control offset received from the BS.

For the CLPC, the UE may be configured to rely on the real-time power control command received from the BS. Since the BS needs to send power control command for the uplink CCs via one downlink CC, the power control command should be provided based on cross-carrier scheduling control. That is, the CLPC power control command should be transmitted accompanying with CC information. For example, the CLPC power control command should specify CC index or carrier ID for applying the CLPC power control command.

In some implementations, the UE may be configured with a maximum transmission power level. The UE is not allowed to transmit uplink power over the maximum transmission power level. Thus, since the UE may need to distribute uplink transmission power among the multiple uplink CCs, power allocation strategy is needed when the CC aggregation is enabled. For example, the UE may be configured to firstly allocate uplink transmission power to the primary carrier and equally allocate the rest uplink transmission power to the other supplementary carriers.

In mobile communication system, uplink resource scheduling should be configured by the BS. Accordingly, uplink resource scheduling over one downlink CC with multiple uplink CCs will be described in the following descriptions. Since the BS only has one downlink CC, the BS may need to transmit the uplink resource scheduling command and the uplink transmission feedback for the multiple uplink CCs via the downlink CC. Specifically, the uplink resource scheduling command may be provided based on cross-carrier scheduling control. That is, the uplink resource scheduling command may be transmitted accompanying with CC information. For example, the uplink resource scheduling command may specify CC index or carrier ID for applying the uplink resource scheduling. On the other hand, the uplink transmission feedback may also be provided based on cross-carrier scheduling control. That is, the uplink transmission feedback (e.g., HARQ ACK/NACK) may be transmitted accompanying with CC information. For example, the uplink transmission feedback may specify CC index or carrier ID corresponding to the uplink transmission feedback.

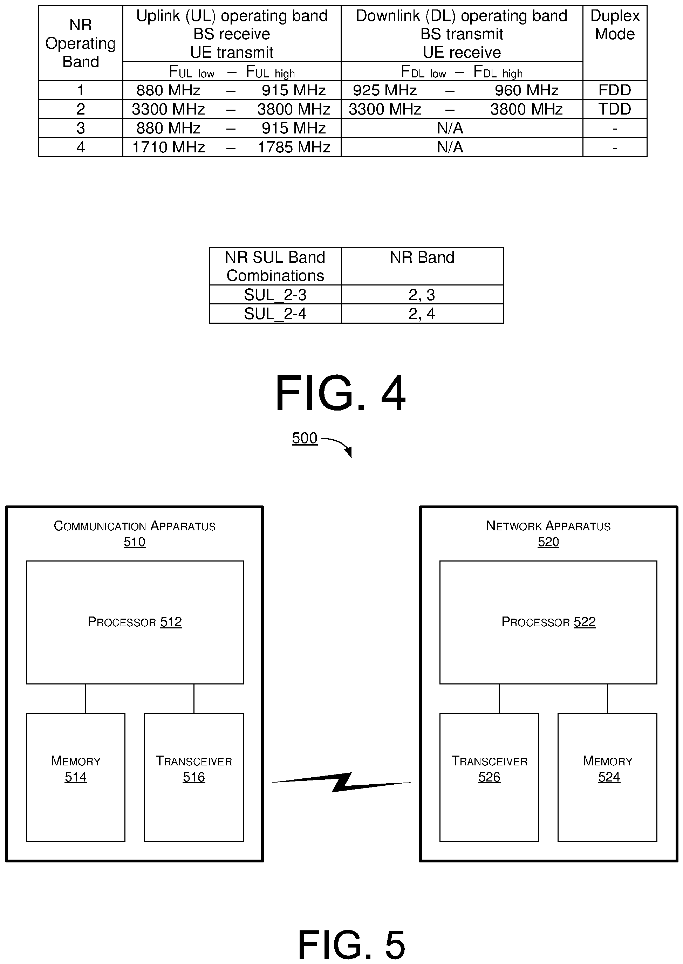

FIG. 4 illustrates example operating frequency bands under schemes in accordance with implementations of the present disclosure. The upper table in FIG. 4 illustrates possible uplink operating band and downlink operating band in a new radio (NR) communication network. For example, in NR operating band 1, the uplink operating band is between 880 MHz and 915 MHz and the downlink operating band is between 925 MHz and 960 MHz. NR operating band 2 may be configured as the high-frequency band carrier. NR operating band 1, 3 and 4 may be configured as the low-frequency band carrier. The lower table in FIG. 4 illustrates possible supplementary uplink (SUL) band combinations in the NR communication network. For example, the first combination (e.g., SUL_2-3) combines band 2 and band 3 of the upper table. That is, one of the uplink operating band of band 2 and band 3 may be configured as the primary carrier and the other one may be configured as the supplementary carrier. The second combination (e.g., SUL_2-4) combines band 2 and band 4 of the upper table. That is, one of the uplink operating band of band 2 and band 4 may be configured as the primary carrier and the other one may be configured as the supplementary carrier.

### Illustrative Implementations

FIG. 5 illustrates an example communication apparatus 510 and an example network apparatus 520 in accordance with an implementation of the present disclosure. Each of communication apparatus 510 and network apparatus 520 may perform various functions to implement schemes, techniques, processes and methods described herein pertaining to data transmission with multiple uplink carrier with respect to user equipment in wireless communications, including scenarios 100 and 200 described above as well as processes 600, 700 and 800 described below.

Communication apparatus 510 may be a part of an electronic apparatus, which may be a user equipment (UE) such as a portable or mobile apparatus, a wearable apparatus, a wireless communication apparatus or a computing apparatus. For instance, communication apparatus 510 may be implemented in a smartphone, a smartwatch, a personal digital assistant, a digital camera, or a computing equipment such as a tablet computer, a laptop computer or a notebook computer. Communication apparatus 510 may also be a part of a machine type apparatus, which may be an IoT apparatus such as an immobile or a stationary apparatus, a home apparatus, a wire communication apparatus or a computing apparatus. For instance, communication apparatus 510 may be implemented in a smart thermostat, a smart fridge, a smart doorlock, a wireless speaker or a home control center. Alternatively, communication apparatus 510 may be implemented in the form of one or more integrated-circuit (IC) chips such as, for example and without limitation, one or more single-core processors, one or more multi-core processors, or one or more complex-instruction-set-computing (CISC) processors. Communication apparatus 510 may include at least some of those components shown in FIG. 5 such as a processor 512, for example. communication apparatus 510 may further include one or more other components not pertinent to the proposed scheme of the present disclosure (e.g., internal power supply, display device and/or user interface device), and, thus, such component(s) of communication apparatus 510 are neither shown in FIG. 5 nor described below in the interest of simplicity and brevity.

Network apparatus 520 may be a part of an electronic apparatus, which may be a network node such as a base station, a small cell, a router or a gateway. For instance, network apparatus 520 may be implemented in an eNodeB in a LTE, LTE-Advanced or LTE-Advanced Pro network or in a gNB in a 5G, NR or IoT network. Alternatively, network apparatus 520 may be implemented in the form of one or more IC chips such as, for example and without limitation, one or more single-core processors, one or more multi-core processors, or one or more CISC processors. Network apparatus 520 may include at least some of those components shown in FIG. 5 such as a processor 522, for example. Network apparatus 520 may further include one or more other components not pertinent to the proposed scheme of the present disclosure (e.g., internal power supply, display device and/or user interface device), and, thus, such component(s) of network apparatus 520 are neither shown in FIG. 5 nor described below in the interest of simplicity and brevity.

In one aspect, each of processor 512 and processor 522 may be implemented in the form of one or more single-core processors, one or more multi-core processors, or one or more CISC processors. That is, even though a singular term "a processor" is used herein to refer to processor 512 and processor 522, each of processor 512 and processor 522 may include multiple processors in some implementations and a single processor in other implementations in accordance with the present disclosure. In another aspect, each of processor 512 and processor 522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 512 and processor 522 is a special-purpose machine specifically designed, arranged and configured to perform specific tasks including power consumption reduction in a device (e.g., as represented by communication apparatus 510) and a network (e.g., as represented by network apparatus 520) in accordance with various implementations of the present disclosure.

In some implementations, communication apparatus 510 may also include a transceiver 516 coupled to processor 512 and capable of wirelessly transmitting and receiving data. In some implementations, communication apparatus 510 may further include a memory 514 coupled to processor 512 and capable of being accessed by processor 512 and storing data therein. In some implementations, network apparatus 520 may also include a transceiver 526 coupled to processor 522 and capable of wirelessly transmitting and receiving data. In some implementations, network apparatus 520 may further include a memory 524 coupled to processor 522 and capable of being accessed by processor 522 and storing data therein. Accordingly, communication apparatus 510 and network apparatus 520 may wirelessly communicate with each other via transceiver 516 and transceiver 526, respectively. To aid better understanding, the following description of the operations, functionalities and capabilities of each of communication apparatus 510 and network apparatus 520 is provided in the context of a mobile communication environment in which communication apparatus 510 is implemented in or as a communication apparatus or a UE and network apparatus 520 is implemented in or as a network node of a communication network.

In some implementations, processor 522 may be configured to transmit, via transceiver 526, downlink data to communication apparatus 510 via a downlink radio carrier. Processor 512 may be configured to transmit, via transceiver 516, uplink data to network apparatus 520 via an uplink radio carrier. According to implementations of the present disclosure, data transmission between communication apparatus 510 and network apparatus 520 may be conducted by combining one downlink radio carrier with a plurality of uplink radio carriers for better coverage and performance in uplink direction. For each configured downlink radio carrier or uplink radio carrier, it may be called a component carrier (CC) in the following descriptions. Each CC may be configured with a specific frequency band and a channel bandwidth.

In some implementations, communication apparatus 510 may be configured one downlink CC and a plurality of uplink CC with network apparatus 520. Processor 512 may be configured to transmit, via transceiver 516, uplink data to network apparatus 520 via at least one of the plurality of uplink CCs. Communication apparatus 510 is able to alternate uplink transmission among the plurality of uplink CCs to strike a balance between good mobility management and high data rate transmission requirements. Further, communication apparatus 510 is able to boost uplink transmission by aggregating more than one uplink CCs to increase uplink data rate. In some implementations, communication apparatus 510 may be connected to one network apparatus over one downlink CC and multiple uplink CCs. In other implementations, communication apparatus 510 may also be connected to more than one network apparatus over one downlink CC and multiple uplink CCs. The multiple uplink CCs may be configured by different network apparatus.

In some implementations, processor 512 may be configured to perform cell selection to select a proper downlink CC of a network apparatus in a wireless communication network. After selecting the downlink CC, processor 512 may be able to initiate an initial access procedure over one uplink CC to establish a connection with the network apparatus (e.g., network apparatus 520). Since network apparatus 520 may have a plurality of uplink CC candidates for communication apparatus 510 to establish the connection, network apparatus 520 may be configured to transmit, via transceiver 526, information of the plurality of uplink CCs in broadcast information. Processor 512 may be configured to receive, via transceiver 516, the broadcast information from network apparatus 520 via the downlink CC.

In some implementations, the broadcast information transmitted by network apparatus 520 may comprise, for example and without limitation, frequency (e.g., central frequency) and bandwidth information of each uplink CC, a criterion for assessing the plurality of uplink CCs, initial access parameters of each uplink CC or load distribution parameters. After receiving the broadcast information, processor 512 may be configured to assess the plurality of uplink CC candidates according to the broadcast information. The assessing criteria may be pathloss of the downlink CC. Processor 512 may be configured to determine whether the pathloss of the downlink CC is greater than a predetermined threshold value which may be comprised in the broadcast information. If the pathloss of the downlink CC is greater than the predetermined threshold value, processor 512 may be configured to select a low-frequency band uplink CC as a first uplink CC to facilitate that network apparatus 520 may be able to correctly receive uplink signal. If the pathloss of the downlink CC is not greater than the predetermined threshold value or there are multiple uplink CCs meet the assessing criteria, load distribution parameters may be further applied by processor 512 to avoid uplink congestion problem (e.g., random access channel (RACH) collision). Network apparatus 520 may use the load distribution parameters to evenly distribute a great number of communication apparatus among multiple uplink CCs for performing initial access procedure. Processor 512 may be configured to select a first uplink CC according to the load distribution parameters.

In some implementations, after selecting the first uplink CC from the plurality of uplink CCs, processor 512 is able to perform the initial access procedure via the first uplink CC according to the initial access parameters in the broadcast information. Processor 512 may be configured to transmit a preamble message (e.g., RACH preamble message) via the first uplink CC to network apparatus 520. Processor 522 may be configured to transmit a response message (e.g., random access response (RAR) message) for allocating uplink transmission resources for following signal transactions via the downlink CC to communication apparatus 510. Since there are multiple uplink CCs and only one downlink CC, processor 522 may need to carry further information (e.g., CC information) in the RAR message for communication apparatus 510 to distinguish RACH over the plurality of uplink CCs. Specifically, processor 522 may carry a RACH radio network temporary identity (RA-RNTI) which may comprise carrier identity (ID) and time-frequency information of the allocated RACH resources in the RAR message. In some implementations, different numerologies may be involved for different uplink CCs, processor 522 may further incorporate the numerologies as one of the parameters in RA-RNTI. For example, symbol number or transmission time interval (TTI) may be different among different uplink CCs. Processor 522 may further incorporate symbol number or TTI parameters in RA-RNTI.

In some implementations, after receiving the RAR message, processor 512 may get the uplink RACH resources over the first uplink CC and may be able to transmit a request message (e.g., RRC Connection Request) for requesting RRC connection establishment to network apparatus 520 via the first uplink CC. Processor 522 may be configured to transmit a connection setup message (e.g., RRC Connection Setup) for establishing the RRC connection to communication apparatus 510 via the downlink CC. After the initial access process is completed successfully, a RRC connection nay be established between communication apparatus 510 and network apparatus 520 with one downlink CC and one uplink CC.

In some implementations, after the downlink CC and the first uplink CC have been determined, processor 522 may be configured to further configure more uplink CCs to the UE to facilitate CC switching or CC aggregation. Processor 522may be configured to transmit configuration of a second uplink CC to communication apparatus 510 via the downlink CC. Processor 512 may be configured to establish a connection over the second uplink CC with network apparatus 520. After the second uplink CC is configured, processor 512 may be able to transmit uplink data to network apparatus 520 via at least one of the first uplink CC and the second uplink CC. Processor 512 may be configured to assign the first uplink CC as a primary carrier and assign the second uplink CC as a supplementary carrier. Processor 512 may also change the primary carrier among the configured uplink CCs (e.g., from the first uplink CC to the second uplink CC) according to a trigger event. The trigger event may be based on a BSR or a PHR.

In some implementations, when there is uplink data in buffer, processor 512 may transmit a BSR to network apparatus 520 for requesting uplink transmission resources. If the BSR indicates a great amount of uplink data, processor 522 may transmit a command for triggering CC switching to communication apparatus 510.Processor 512 may be configured to switch the primary carrier to an uplink CC in high-frequency band. For example, processor 512 may be configured to switch the primary carrier from the first uplink CC to the second uplink CC. In some implementations, processor 522 may further configure a third uplink CC with available uplink transmission resources to communication apparatus 510. Processor 512 may switch the primary carrier to the third uplink CC.

In some implementations, when uplink transmission power reaches a predetermined threshold value, processor 512 may transmit a PHR to network apparatus 520.Processor 522 may transmit a command for triggering CC switching to communication apparatus 510.Processor 512 may be configured to switch the primary carrier to an uplink CC in low-frequency band. For example, processor 512 may be configured to switch the primary carrier from the second uplink CC to the first uplink CC.

In some implementations, processor 522 may transmit a PDCCH command to communication apparatus 510 for triggering the CC switching in layer 1 (e.g., physical layer) implementation. Processor 522 may transmit a MAC CE command to communication apparatus 510 for triggering the CC switching in layer 2 (e.g., Media Access Control (MAC) layer) implementation. Processor 522 may transmit a RRC message (e.g., RRC Connection Reconfiguration) to communication apparatus 510 for triggering the CC switching in layer 3 (e.g., RRC layer) implementation.

In some implementations, uplink transmission power control over one downlink CC with multiple uplink CCs may be implemented in OLPC or CLPC. For the OLPC, processor 512 may be configured to compensate the passloss of the downlink CC. Processor 512 may be configured to measure reference signals from the downlink CC and derive the downlink pathloss. Since the downlink CC may be the only measurement object, processor 512 may be configured to estimate pathloss of uplink CCs based on the measured downlink pathloss. Processor 522 may be configured to further provide an additional power control offset to communication apparatus 510. Processor 512 is able to estimate the pathloss of the uplink CCs according to the measured downlink CC pathloss and the additional power control offset received from network apparatus 520. For the CLPC, processor 512 may be configured to rely on the real-time power control command received from network apparatus 520. Since network apparatus 520 needs to send power control command for the uplink CCs via one downlink CC, the power control command should be provided based on cross-carrier scheduling control. That is, the CLPC power control command should be transmitted accompanying with CC information. For example, the CLPC power control command provided by network apparatus 520 should specify CC index or carrier ID for applying the CLPC power control command.

In some implementations, communication apparatus 510 may be configured with a maximum transmission power level. Communication apparatus 510 is not allowed to transmit uplink power over the maximum transmission power level. Thus, since communication apparatus 510 may need to distribute uplink transmission power among the multiple uplink CCs, power allocation strategy is needed when the CC aggregation is enabled. For example, processor 512 may be configured to firstly allocate uplink transmission power to the primary carrier and equally allocate the rest uplink transmission power to the other supplementary carriers.

In some implementations, since network apparatus 520 only has one downlink CC, network apparatus 520 may need to transmit the uplink resource scheduling command and the uplink transmission feedback for the multiple uplink CCs via the downlink CC. The uplink resource scheduling command transmitted by network apparatus 520 may further specify CC index or carrier ID for applying the uplink resource scheduling. The uplink transmission feedback (e.g., HARQ ACK/NACK) transmitted by network apparatus 520 may further specify CC index or carrier ID corresponding to the uplink transmission feedback.

### Illustrative Processes

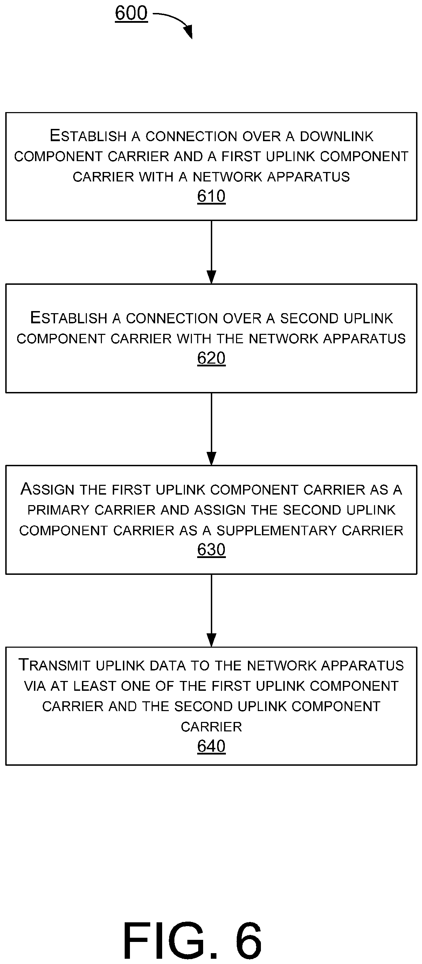

FIG. 6 illustrates an example process 600 in accordance with an implementation of the present disclosure. Process 600 may be an example implementation of scenarios 100 and 200, whether partially or completely, with respect to data transmission over multiple uplink carrier in accordance with the present disclosure. Process 600 may represent an aspect of implementation of features of communication apparatus 510. Process 600 may include one or more operations, actions, or functions as illustrated by one or more of blocks 610, 620, 630 and 640. Although illustrated as discrete blocks, various blocks of process 600 may be divided into additional blocks, combined into fewer blocks, or eliminated, depending on the desired implementation. Moreover, the blocks of process 600 may executed in the order shown in FIG. 6 or, alternatively, in a different order. Process 600 may be implemented by communication apparatus 510 or any suitable UE or machine type devices. Solely for illustrative purposes and without limitation, process 600 is described below in the context of communication apparatus 510. Process 600 may begin at block 610.

At 610, process 600 may involve communication apparatus 510 establishing a connection over a downlink component carrier and a first uplink component carrier with a network apparatus. Process 600 may proceed from 610 to 620.

At 620, process 600 may involve communication apparatus 510 establishing a connection over a second uplink component carrier with the network apparatus. Process 600 may proceed from 620 to 630.

At 630, process 600 may involve communication apparatus 510 assigning the first uplink component carrier as a primary carrier and assigning the second uplink component carrier as a supplementary carrier. Process 600 may proceed from 630 to 640.

At 640, process 600 may involve communication apparatus 510 transmitting uplink data to the network apparatus via at least one of the first uplink component carrier and the second uplink component carrier.

In some implementations, process 600 may involve communication apparatus 510 switching the primary carrier from the first uplink component carrier to the second uplink component carrier. The switching of the primary carrier may be triggered by a power headroom report or a buffer status report of the apparatus.

In some implementations, process 600 may involve communication apparatus 510 aggregating the first uplink component carrier and the second uplink component carrier and transmitting uplink data via both the first uplink component carrier and the second uplink component carrier.

In some implementations, process 600 may involve communication apparatus 510 adjusting uplink transmission power of the first uplink component carrier or the second uplink component carrier according to an addition power control offset received from the network apparatus. The addition power control offset is used to compensate pathloss measurement of the downlink component carrier.

In some implementations, process 600 may involve communication apparatus 510 adjusting uplink transmission power of the first uplink component carrier or the second uplink component carrier according to a power control command received from the network apparatus. The power control command may further comprise component carrier information.

In some implementations, process 600 may involve communication apparatus 510 receiving uplink resource scheduling command for the first uplink component carrier and the second uplink component carrier via the downlink component carrier. The uplink resource scheduling command may further comprise component carrier information.

In some implementations, process 600 may involve communication apparatus 510 receiving transmission feedback corresponding to the first uplink component carrier and the second uplink component carrier via the downlink component carrier. The transmission feedback may further comprise component carrier information.

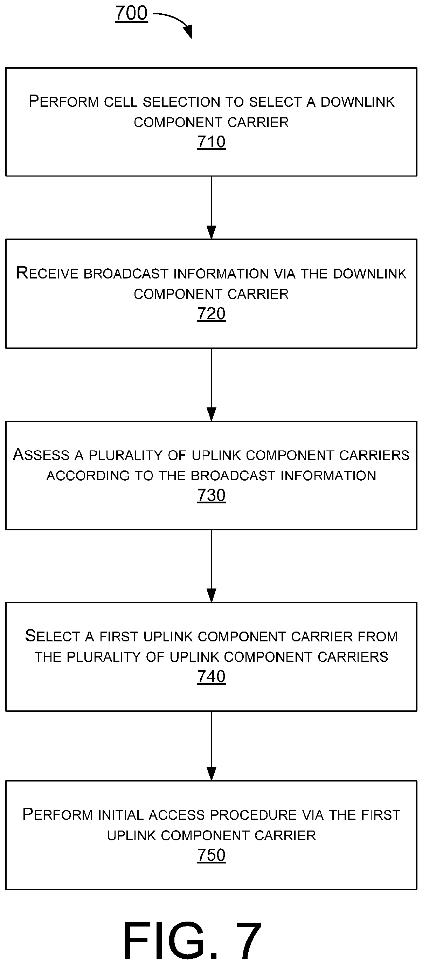

FIG. 7 illustrates an example process 700 in accordance with an implementation of the present disclosure. Process 700 may be an example implementation of scenarios 100 and 200, whether partially or completely, with respect to data transmission over multiple uplink carrier in accordance with the present disclosure. Process 700 may represent an aspect of implementation of features of communication apparatus 510. Process 700 may include one or more operations, actions, or functions as illustrated by one or more of blocks 710, 720, 730, 740 and 740. Although illustrated as discrete blocks, various blocks of process 700 may be divided into additional blocks, combined into fewer blocks, or eliminated, depending on the desired implementation. Moreover, the blocks of process 700 may executed in the order shown in FIG. 7 or, alternatively, in a different order. Process 700 may be implemented by communication apparatus 510 or any suitable UE or machine type devices. Solely for illustrative purposes and without limitation, process 700 is described below in the context of communication apparatus 510. Process 700 may begin at block 710.

At 710, process 700 may involve communication apparatus 510 performing cell selection to select a downlink component carrier. Process 700 may proceed from 710 to 720.

At 720, process 700 may involve communication apparatus 510 receiving broadcast information via the downlink component carrier. The broadcast information may comprise frequency and bandwidth information of each uplink component carrier, a criterion for assessing the plurality of uplink component carriers or initial access parameters of each uplink component carrier. Process 700 may proceed from 720 to 730.

At 730, process 700 may involve communication apparatus 510 assessing a plurality of uplink component carriers according to the broadcast information. Process 700 may proceed from 730 to 740.

At 740, process 700 may involve communication apparatus 510 selecting a first uplink component carrier from the plurality of uplink component carriers. Process 700 may proceed from 740 to 750.

At 750, process 700 may involve communication apparatus 510 performing initial access procedure via the first uplink component carrier.

In some implementations, process 700 may involve communication apparatus 510 transmitting a preamble message via the first uplink component carrier and receiving a response message via the downlink component carrier. The response message may comprise component carrier information of the first uplink component carrier.

In some implementations, process 700 may involve communication apparatus 510 receiving configuration of a second uplink component carrier via the downlink component carrier and establishing a connection over the second uplink component carrier.

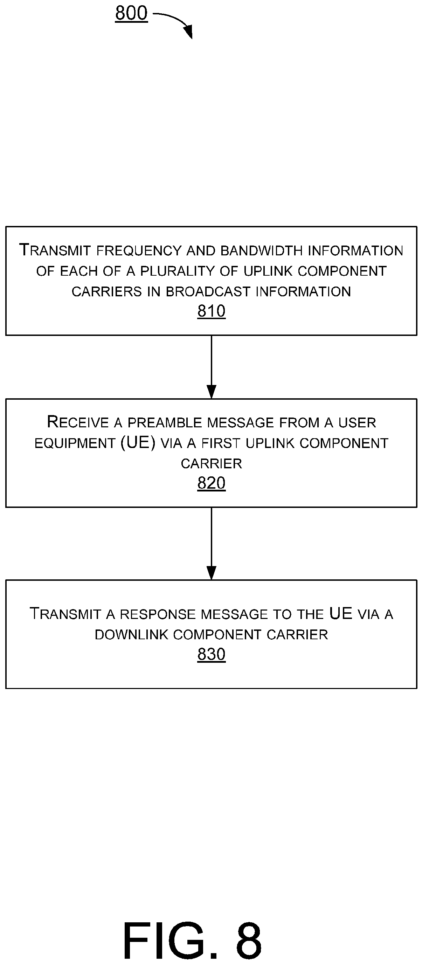

FIG. 8 illustrates an example process 800 in accordance with an implementation of the present disclosure. Process 800 may be an example implementation of scenarios 100 and 200, whether partially or completely, with respect to data transmission over multiple uplink carrier in accordance with the present disclosure. Process 800 may represent an aspect of implementation of features of network apparatus 520. Process 800 may include one or more operations, actions, or functions as illustrated by one or more of blocks 810, 820 and 830. Although illustrated as discrete blocks, various blocks of process 800 may be divided into additional blocks, combined into fewer blocks, or eliminated, depending on the desired implementation. Moreover, the blocks of process 800 may executed in the order shown in FIG. 8 or, alternatively, in a different order. Process 800 may be implemented by network apparatus 520 or any suitable base station or network nodes. Solely for illustrative purposes and without limitation, process 800 is described below in the context of network apparatus 520. Process 800 may begin at block 810.

At 810, process 800 may involve network apparatus 520transmitting frequency and bandwidth information of each of a plurality of uplink component carriers in broadcast information.Thebroadcast information may further comprise a criterion for the UE to select a first uplink component carrier or initial access parameters of each uplink component carrier for the UE to transmit a preamble message. Process 800 may proceed from 810 to 820.

At 820, process 800 may involve network apparatus 520 receiving a preamble message from a UE via a first uplink component carrier. The first uplink component carrier may be one of the plurality of uplink component carriers. Process 800 may proceed from 820 to 830.

At 830, process 800 may involve network apparatus 520 transmitting a response message to the UE via a downlink component carrier. The response message may comprise component carrier information of the first uplink component carrier.

In some implementations, process 800 may involve network apparatus 520 transmitting configuration of a second uplink component carrier to the UE via the downlink component carrier establishing a connection over the second uplink component carrier with the UE.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediary components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration.

## Claims

1. A method, comprising:
establishing (610), by a processor (512) of an apparatus (510) implemented in a user equipment, UE, a connection over a downlink component carrier and a first uplink component carrier with a network apparatus (520);
establishing (620), by the processor (512) of the apparatus (510), a connection over a second uplink component carrier with the network apparatus (520);
assigning (630), by the processor (512) of the apparatus (510), the first uplink component carrier as a primary carrier and assigning the second uplink component carrier as a supplementary carrier;
receiving, by the processor (512) of the apparatus (510), a command from the network apparatus; and
transmitting (640), by the processor (512) of the apparatus (510), uplink data to the network apparatus via at least one of the first uplink component carrier and the second uplink component carrier,
the method further comprising:
when the command contains multiple bits having a predefined value, aggregating at least the first uplink component carrier and the second uplink component carrier to form aggregate in an event that the multiple bits correspond to at least the first uplink component carrier and the second uplink component carrier; and
when the command contains a single bit having the predefined value, switching the primary carrier from the first uplink component carrier to the second uplink component carrier in an event that the single bit corresponds to the second uplink component carrier and switching the primary carrier back from the second uplink component carrier to the first uplink component in an event that the single bit corresponds to the first uplink component carrier.

2. The method of Claim 1, further comprising:
adjusting, by the processor (512) of the apparatus (510), uplink transmission power of the first uplink component carrier or the second uplink component carrier according to an addition power control offset received from the network apparatus (520),
wherein the addition power control offset is used to compensate pathloss measurement of the downlink component carrier.

3. The method of Claim 1, further comprising:
adjusting, by the processor (512) of the apparatus (510), uplink transmission power of the first uplink component carrier or the second uplink component carrier according to a power control command received from the network apparatus (520),
wherein the power control command comprises component carrier information.

## Patentansprüche

1. Verfahren, umfassend:
Einrichten (610), durch einen Prozessor (512) einer Vorrichtung (510), die in einer Teilnehmerausrüstung, UE, implementiert ist, einer Verbindung über einen Downlink-Komponententräger und einen ersten Uplink-Komponententräger mit einer Netzwerkvorrichtung (520);
Einrichten (620), durch den Prozessor (512) der Vorrichtung (510), einer Verbindung über einen zweiten Uplink-Komponententräger mit der Netzwerkvorrichtung (520);
Bestimmen (630), durch den Prozessor (512) der Vorrichtung (510), des ersten Uplink-Komponententrägers als einen Primärträger und Bestimmen des zweiten Uplink-Komponententrägers als einen Zusatzträger;
Empfangen, durch den Prozessor (512) der Vorrichtung (510), eines Kommandos von der Netzwerkvorrichtung; und
Senden (640), durch den Prozessor (512) der Vorrichtung (510), von Uplink-Daten an die Netzwerkvorrichtung über mindestens einen des ersten Uplink-Komponententrägers und des zweiten Uplink-Komponententrägers,
wobei das Verfahren weiter umfasst:
wenn das Kommando mehrere Bits umfasst, die einen vordefinierten Wert aufweisen, Zusammenfassen mindestens des ersten Uplink-Komponententrägers und des zweiten Uplink-Komponententrägers, um eine Zusammenfassung in einem Fall zu bilden, dass die mehreren Bits zu mindestens dem ersten Uplink-Komponententräger und dem zweiten Uplink-Komponententräger korrespondieren; und
wenn das Kommando ein einzelnes Bit umfasst, das den vordefinierten Wert aufweist, Wechseln des Primärträgers von dem ersten Uplink-Komponententräger zu dem zweiten Uplink-Komponententräger in einem Fall, dass das einzelne Bit zu dem zweiten Uplink-Komponententräger korrespondiert, und Wechseln des Primärträgers zurück von dem zweiten Uplink-Komponententräger zu dem ersten Uplink-Komponententräger in einem Fall, dass das einzelne Bit zu dem ersten Uplink-Komponententräger korrespondiert.

2. Verfahren gemäß Anspruch 1, weiter umfassend:
Einstellen, durch den Prozessor (512) der Vorrichtung (510), einer Uplink-Übertragungsleistung des ersten Uplink-Komponententrägers oder des zweiten Uplink-Komponententrägers gemäß einem Zusatzleistungssteuerungsversatz, der von der Netzwerkvorrichtung (520) empfangen wird,
wobei der Zusatzleistungssteuerungsversatz verwendet wird, um eine Pfadverlustmessung des Downlink-Komponententrägers zu kompensieren.

3. Verfahren gemäß Anspruch 1, weiter umfassend:
Einstellen, durch den Prozessor (512) der Vorrichtung (510), einer Uplink-Übertragungsleistung des ersten Uplink-Komponententrägers oder des zweiten Uplink-Komponententrägers gemäß einem Leistungssteuerungskommando, das von der Netzwerkvorrichtung (520) empfangen wird,
wobei das Leistungssteuerungskommando Komponententrägerinformationen umfasst.

## Revendications

1. Procédé, comprenant :
l'établissement (610), par un processeur (512) d'un appareil (510) mis en oeuvre dans un équipement utilisateur, UE, d'une connexion sur une porteuse de composante de liaison descendante et une première porteuse de composante de liaison montante avec un appareil de réseau (520) ;
l'établissement (620), par le processeur (512) de l'appareil (510), d'une connexion sur une deuxième porteuse de composante de liaison montante avec l'appareil de réseau (520) ;
l'attribution (630), par le processeur (512) de l'appareil (510), de la première porteuse de composante de liaison montante en tant que porteuse primaire et l'attribution de la deuxième porteuse de composante de liaison montante en tant que porteuse supplémentaire ;
la réception, par le processeur (512) de l'appareil (510), d'une instruction de l'appareil de réseau ; et
la transmission (640), par le processeur (512) de l'appareil (510), de données de liaison montante à l'appareil de réseau via au moins l'une de la première porteuse de composante de liaison montante et de la deuxième porteuse de composante de liaison montante,
le procédé comprenant en outre :
lorsque l'instruction contient plusieurs bits ayant une valeur prédéfinie, l'agrégation d'au moins la première porteuse de composante de liaison montante et la deuxième porteuse de composante de liaison montante pour former un agrégat dans le cas où les plusieurs bits correspondent à au moins la première porteuse de composante de liaison montante et la deuxième porteuse de composante de liaison montante ; et
lorsque l'instruction contient un seul bit ayant la valeur prédéfinie, la commutation de la porteuse primaire de la première porteuse de composante de liaison montante à la deuxième porteuse de composante de liaison montante dans le cas où le seul bit correspond à la deuxième porteuse de composante de liaison montante et la commutation de nouveau de la porteuse primaire de la deuxième porteuse de composante de liaison montante à la première porteuse de composante de liaison montante dans le cas où le seul bit correspond à la première porteuse de composante de liaison montante.

2. Procédé selon la revendication 1, comprenant en outre :
le réglage, par le processeur (512) de l'appareil (510), de la puissance d'émission de liaison montante de la première porteuse de composante de liaison montante ou de la deuxième porteuse de composante de liaison montante selon un décalage de commande de puissance supplémentaire reçu de l'appareil de réseau (520),
dans lequel le décalage de commande de puissance supplémentaire est utilisé pour compenser la mesure d'affaiblissement de propagation de la porteuse de composante de liaison descendante.

3. Procédé selon la revendication 1, comprenant en outre :
le réglage, par le processeur (512) de l'appareil (510), de la puissance d'émission de liaison montante de la première porteuse de composante de liaison montante ou de la deuxième porteuse de composante de liaison montante selon une instruction de commande de puissance reçue de l'appareil de réseau (520),
dans lequel l'instruction de commande de puissance comprend des informations de porteuse de composante.
